# EUROPÄISCHE PATENTSCHRIFT

(11) **EP 4 127 633 B1**
(45) Veröffentlichungstag und Bekanntmachung des Hinweises auf die Patenterteilung: **14.02.2024**
(21) Anmeldenummer: 21715797.3
(22) Anmeldetag: 23.03.2021
(51) Int. Cl.: G01K 7/18

(54) **LEISTUNGSMODUL**
POWER MODULE
MODULE DE PUISSANCE

(30) Priorität: 26.03.2020 DE 102020203918
(43) Veröffentlichungstag der Anmeldung: 08.02.2023
(73) Patentinhaber: Robert Bosch GmbH, 70442 Stuttgart (DE)
(72) Erfinder: GROSSMANN, Oliver, 72770 Reutlingen (DE); ROSAHL, Thoralf, 72800 Eningen (DE); HOMOTH, Jan, 72770 Reutlingen (DE); STRACHE, Sebastian, 72827 Wannweil (DE); BARNER, Alexander, 72770 Reutlingen (DE)
(86) Internationale Anmeldenummer: PCT/EP2021/057382
(87) Internationale Veröffentlichungsnummer: WO 2021/191187

(56) Entgegenhaltungen:
- US-B2- 10 260 961

## Beschreibung

Die vorliegende Erfindung betrifft ein Leistungsmodul umfassend ein Substrat sowie mindestens einen auf einer Unterseite des Substrats angeordneten Leistungstransistor, sowie mindestens einen mit dem Substrat verbundenen Leistungsanschluss.

### Stand der Technik

Leistungsmodule generieren stark lokalisiert große Wärmemengen, die bei nicht ausreichender Kühlung/Herunterregelung die Lebensdauer des Leistungsmoduls stark reduzieren können. Gleichzeitig ist es schwierig, in größeren Anordnungen von Leistungsmodulen eine gezielte Kühlung je nach Bedarf bereitzustellen beziehungsweise die Temperatur der einzelnen Leistungstransistoren ohne größere Verzögerung zu messen und einen Überblick darüber zu behalten, wie stark die einzelnen Leistungsmodule bzw. Leistungshalbleiter/ Leistungstransistoren belastet werden.

Temperaturerfassung wird in Leistungsmodulen auf unterschiedliche Weisen realisiert:
- NTC (englisch *Negative Temperature Coefficient*) - oder PTC (englisch *Positive Temperature Coefficient*) - Widerstände werden im Leistungsmodul in der Nähe der Leistungstransistoren angeordnet und über deren temperaturabhängigen Widerstand die Temperatur bestimmt,
- Erfassung der Temperatur über spezielle Bauteilanordnungen (Dioden/Widerstände) auf dem Substrat,
- Verwendung von temperatursensitiven, elektrisch messbaren Eigenschaften der Leistungstransistoren zur direkten Ermittlung der Temperatur des jeweiligen Leistungstransistors.

US10260961 B2 offenbart ein Modul mit einem oder mehreren integrierten Schaltungsplättchen ("integrated circuit die"), die auf einem Substrat ("package substrate") angeordnet sind und im Substrat angeordnete Leiterschleifen zur Temperaturmessung umfassen (Sp. 2, Z. 9-14).

Die genannten Lösungen sind jedoch entweder ungenau und bzw. oder weisen durch ihren Abstand zur heißesten Stelle eine deutliche Zeitverzögerung in der Messung einer Temperaturspitze auf oder sie erfordern einen deutlich komplizierten Aufbau des Leistungstransistors.

### Offenbarung der Erfindung

Erfindungsgemäß wird ein Leistungsmodul der eingangs genannten Art zur Verfügung gestellt, wobei eine Leiterschleife zur Temperaturmessung auf einer dem Leistungstransistor gegenüberliegenden Oberseite oder inneren oder äußeren Substratschicht angeordnet ist, dadurch gekennzeichnet, dass die Leiterschleife oberhalb des Source des Leistungstransistors angeordnet ist und im Wesentlichen nur die Fläche des Source des Leistungstransistors und nicht das Gate bedeckt.

### Vorteile der Erfindung

Dies hat den Vorteil, dass die Temperatur deutlich näher als zuvor an dem mindestens einen Leistungstransistor, und damit an der Quelle der Verlustwärme, gemessen wird. Damit kann vermieden werden, dass sich ein Leistungstransistor zu stark erhitzt, bevor die Wärme durch Wärmeleitung die Leiterschleife erreicht, wie dies im Stand der Technik aufgrund des höheren Abstandes der Fall sein kann. Jedes deutliche Überschreiten der Betriebstemperatur senkt in der Regel die Lebensdauer des einzelnen Leistungstransistors.

In Leistungsmodulen mit mehreren Leistungstransistoren kommt hinzu, dass es eine gewisse Wahrscheinlichkeit gibt, dass sich ein Leistungstransistor im Mittel häufiger und stärker erhitzt als die anderen Leistungstransistoren und damit als erster ausfällt. Außerdem kann sich ein Leistungstransistor aufgrund von Fertigungstoleranzen bei derselben Belastung höher erhitzen als ein anderer Leistungstransistor desselben Typs. Ein Ausfall eines Leistungstransistors führt aber häufig schon dazu, dass das gesamte Leistungsmodul ausgetauscht werden muss. Die erfindungsgemäße Lösung erlaubt es daher deutlich besser, die Temperaturbelastung der einzelnen Leistungstransistoren zu überwachen und gegebenenfalls gegenzusteuern, um die Gesamtlebensdauer des Leistungsmoduls zu erhöhen.

Das Substrat ist vorzugsweise ein mehrschichtiges Substrat, so dass sowohl die Leistungs-, Logikverdrahtung (z.B. Steuerleitungen für Leistungstransistoren) und die zur Temperaturmessung benötigte Leiterschleife integriert werden können. Die Unterseite des Substrats kann beispielsweise die unterste Schicht des Substrats sein oder zumindest die unterste Schicht mit leitenden Elementen. Entsprechend kann die Oberseite des Substrats beispielsweise die oberste Schicht des Substrats sein, auf der leitende Elemente angeordnet sind.

Die Leiterschleife kann gemäß einer nicht beanspruchten Variante gegenüber dem gesamten Leistungstransistor oder gemäß der beanspruchten Erfindung nur einem Teil des Leistungstransistors angeordnet sein. Wenn mehrere Leistungstransistoren mit einem Substrat verbunden sind, ist vorzugsweise jeder Leistungstransistor mit einer eigenen Leiterschleife auf oberhalb des jeweiligen Leistungstransistors z.B. in einer Innenlage oder der Oberseite des Substrats versehen. Die einzelnen Leiterschleifen können dann aber mit einer gemeinsamen Auswertelektronik (zum Beispiel eine anwendungsspezifische integrierte Schaltung, ASIC, des Leistungsmoduls) verbunden sein.

Vorteilhafte Weiterbildungen der Erfindung sind in den Unteransprüchen angegeben und in der Beschreibung beschrieben.

Vorzugsweise weist die Leiterschleife einen mäandernden Verlauf auf. Dadurch lässt sich die Leiterstrecke unter Einfluss der erhöhten Temperatur vergrößern und damit beispielsweise ein möglichst großer Absoluteffekt auf den Widerstand der Leiterschleife erzielen.

Erfindungsgemäß ist die Leiterschleife gegenüber dem Source des Leistungstransistors angeordnet. Bei einem Feldeffekttransistor ist der Source üblicherweise aufgrund der Nähe zum aktiven Gebiet des Transistors die stärkste Wärmequelle und die Leiterschleife kann für eine optimale Sensitivität daher nur gegenüber dem Source angeordnet sein. Da lokale Spitzentemperaturen zu langfristigen Schadstellen führen können, sind diese deutlich besser als die mittlere Temperatur des Leistungstransistors ein Indikator für eine problematische Überhitzung. Es ist daher vorteilhaft gezielt die Temperatur der üblicherweise heißesten Stelle des Leistungstransistors zu messen.

In einer Ausführungsform verläuft die Leiterschleife über mehrere Substratschichten. Dadurch lässt sich die Genauigkeit der Temperaturmessung erhöhen. Die Leiterschleife kann in mehreren Substratschichten einen mäandernden Verlauf aufweisen. Die Leiterschleife kann über Durchkontaktierungen (Vias) mit den verschiedenen Substratschichten verbunden sein.

Es ist bevorzugt, wenn auf dem Substrat mindestens zwei Leistungstransistoren angeordnet sind, wobei jeweils eine separate Leiterschleife zur Temperaturmessung oberhalb des jeweiligen Leistungstransistors in einer Innenlage oder der Oberseite des Substrats angeordnet ist. Vorzugsweise ist für jeden Leistungstransistor jeweils eine separate Leiterschleife angeordnet, also beispielsweise drei, vier, fünf, sechs oder mehr Leistungstransistoren und Leiterschleifen desselben Leistungsmoduls.

In einer Ausführungsform weist mindestens eine Leiterschleife einen temperaturabhängigen Widerstand auf. Über den temperaturabhängigen Widerstand sind dann beispielsweise über eine Strommessung bei konstanter Spannung eine Widerstandsmessung und damit eine Temperaturmessung möglich. Der temperaturabhängige Widerstand kann ein NTC-Widerstand oder ein PTC-Widerstand sein.

In einer bevorzugten Ausführungsform umfasst das Leistungsmodul mindestens eine anwendungsspezifische integrierte Schaltung (ASIC), die mit mindestens zwei Leistungstransistoren sowie mit den mindestens zwei entsprechenden Leiterschleifen verbunden ist. Die ASIC kann dann beispielsweise über eine Einzelgate-Steuerung die einzelnen Leistungstransistoren regeln, um die Temperaturbelastung der Leistungstransistoren (momentan oder über die Zeit) anzugleichen und damit die Gesamtlebensdauer oder Leistungsfähigkeit des Leistungsmoduls zu erhöhen. Die ASIC kann auf der Unterseite oder der Oberseite des Substrats angeordnet sein. Im letzteren Fall können die Leiterschleifen beispielsweise über Durchkontaktierungen (Vias) mit dem ASIC verbunden sein.

In einer Ausführungsform ist die anwendungsspezifische integrierte Schaltung so eingerichtet, dass sie die Auslastung der mindestens zwei Leistungstransistoren so steuert, dass die über die Leiterschleifen gemessene Temperatur möglichst gleich ist. Diese Lösung ist möglichst einfach, da es nicht unbedingt notwendig ist, eine "Temperaturhistorie" für die einzelnen Leistungstransistoren zu speichern, um zu entscheiden, welcher Leistungstransistor mehr belastet werden kann und soll. Es kann dann einfach im Betrieb der oder die Leistungstransistoren heruntergeregelt werden, deren Temperaturen oberhalb eines oberen Temperaturschwellenwerts (einer problematischen Temperatur) liegt und diejenigen Leistungstransistoren hochgeregelt werden, deren Temperatur unterhalb eines unteren Temperaturschwellenwerts (einer unproblematischen Temperatur) liegt. Die Verwendung von zwei verschiedenen Schwellenwerten kann die Regelung dabei stabilisieren, um häufiges Hochregeln und Herunterregeln zu vermeiden.

Es ist bevorzugt, wenn das Substrat eine mehrschichtige Niedertemperatur-Einbrand-Keramik (engl. *Low Temperature Cofired Ceramics,* LTCC) ist oder umfasst. Bei einem derartigen Substrat ist es problemlos möglich, auf der die Leistungstransistoren umfassenden Unterseite gegenüberliegenden Oberseite bzw. in den Innenlagen zusätzliche Leiterschleifen zur Temperaturmessung vorzusehen, ohne dass dies die Fertigungsprozesse deutlich erschwert.

In einer Ausführungsform erfolgt die Temperaturmessung in mindestens einer Leiterschleife über eine Vierpunktmessung oder einen Band-Ende-Abgleich. Diese Messmethoden erhöhen die Genauigkeit der Messung, ohne den Aufbau deutlich zu erschweren. Es sind dann aber gegebenenfalls ein anderer Verlauf der Leiterschleife und entsprechende Anschlüsse an die Auswerteelektronik (zum Beispiel lokaler ASIC) erforderlich.

In einer Ausführungsform sind mehrere Leiterschleifen in unterschiedlichen Substratschichten angeordnet und in Reihe geschaltet. Dadurch lässt sich die Länge der Leiterschleife im heißen Bereich zu maximieren. Hierdurch wird die Widerstandsänderung bei einer Temperaturänderung und somit die Sensitivität der Temperaturmessung erhöht.

In einer Ausführungsform umfasst das Leistungsmodul mindestens zwei Substrate. Eine Leistungsverdrahtung und die Leiterschleifen zur Temperaturmessung können dabei in einem der beiden Substrate (z. B. in unterschiedlichen Substratschichten) angeordnet sein.

In einer Ausführungsform umfasst das Leistungsmodul mehrere zwischen Substratschichten eingebettete Leistungshalbleiter. Hier umfasst das Leistungsmodul vorzugsweise nur ein Substrat mit mehreren Substratschichten. Die Leistungshalbleiter können in einer inneren Substratschicht angeordnet sein und von beiden Seiten zwischen weiteren Substratschichten eingebettet bzw. gesandwicht sein.

In einer Ausführungsform umfasst das Leistungsmodul mehrere zwischen zwei Substraten eingebettete Leistungshalbleiter, wobei in mindestens einem der Substrate Leiterschleifen zur Temperaturmessung angeordnet sind. Diese Leistungshalbleiter sind bevorzugt "kopfüber" in dem Substrat eingebettet, so dass sich die Source Fläche auf der Unterseite befindet. In diesem Fall wäre die Mäanderstruktur "unterhalb" der Leistungstransistoren (z. B. MOSFETs) angeordnet. Zusätzlich zu dem Leistungstransistor umfasst das Leistungsmodul also auch mehrere Leistungshalbleiter, dessen Temperatur ebenfalls mit einer oder mehreren Leiterschleifen gemessen werden kann. Die Leistungshalbleiter können beispielweise Leistungsdioden, Thyristoren oder Triacs sein.

In einer Ausführungsform umfasst das Leistungsmodul mindestens einen Leistungshalbleiter, wobei eine weitere Leiterschleife zur Temperaturmessung auf einer dem Leistungshalbleiter gegenüberliegenden Oberseite des Substrats angeordnet ist. Auch hier umfasst das Leistungsmodul also zusätzlich zu dem Leistungstransistor auch mindestens einen Leistungshalbleiter, dessen Temperatur ebenfalls mit einer Leiterschleife gemessen werden kann. Der Leistungshalbleiter kann beispielweise eine Leistungsdiode, ein Thyristor oder ein Triac sein.

In Vergleich zu klassischen Anordnungen (NTC) der Leiterschleife neben einem Leistungshalbleiter auf einem unteren Substrat ist die Leiterschleife erfindungsgemäß sehr nahe am Hotspot und nicht im Kühlpfad angeordnet. Hierdurch kann die Maximaltemperatur des Leistungshalbleiters mit einer hohen Genauigkeit gemessen werden.

Bevorzugt wird unter einer Außenlage eines Substrates die oberste und unterste Schicht eines Substrates verstanden. Außenlagen haben daher auf einer Seite keinen Kontakt zu weiteren Substratschichten.

Bevorzugt wird unter einer inneren Substratschicht beziehungsweise einer sogenannten Innenlage eine Substratschicht verstanden, welche zwischen zwei Substratlagen liegt. Dementsprechend hat ein Substrat immer mindestens eine Außenlage aber nicht zwingend eine Innenlage. Für eine Innenlage sind mindestens drei Substratschichten, also zwei Außenlagen (Top, Botton) und eine Innenlage zwischen diesen beiden Außenlagen erforderlich.

### Zeichnungen

Ausführungsbeispiele der Erfindung werden anhand der einzigen Zeichnung und der nachfolgenden Beschreibung näher erläutert. Es zeigt:
Figur 1 eine erste Ausführungsform eines Leistungsmoduls in einer Ansicht von der Oberseite des Leistungsmoduls.
Figur 2 eine zweite Ausführungsform eines Leistungsmoduls in einer Ansicht von der Oberseite des Leistungsmoduls.
Figur 3 eine dritte Ausführungsform eines Leistungsmoduls in Querschnittsansicht.
Figur 4 eine vierte Ausführungsform eines Leistungsmoduls in Querschnittsansicht.

### Ausführungsformen der Erfindung

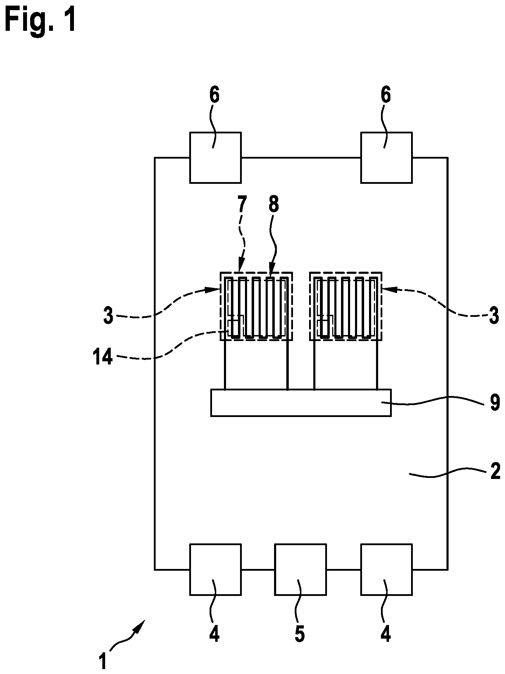

In Figur 1 ist eine Ausführungsform eines Leistungsmoduls 1 umfassend ein Substrat 2 sowie mehrere (hier lediglich exemplarisch zwei) auf einer Unterseite des Substrates 2 angeordnete Leistungstransistoren 3. Figur 1 zeigt eine Ansicht von der Oberseite des Substrates 2 und die Leistungstransistoren 3 auf der gegenüberliegenden Unterseite bzw. in einer inneren Substratschicht sind daher lediglich gestrichelt dargestellt.

Das Leistungsmodul 1 umfasst fünf mit dem Substrat 2 verbundene Leistungsanschlüsse 4, 5, 6. Die Leistungsanschlüsse 4, 5, 6 können beispielsweise mit je einem Source 7 und einem Gate 14 (jeweils gestrichelt eingezeichnet, da auf der Unterseite des Substrats oder in das Substrat eingebettet) je eines Leistungstransistors 3 verbunden sein. Die Leistungsanschlüsse 4 können beispielsweise eine Versorgungsspannung liefern, der Leistungsanschluss 5 kann beispielsweise eine Masse bereitstellen und die Leistungsanschlüsse 6 können Phasenanschlüsse sein. Eine entsprechende Steuerelektronik auf dem Substrat 2 ist hier der Einfachheit halber nicht dargestellt.

Erfindungsgemäß sind Leiterschleifen 8 zur Temperaturmessung auf einer den Leistungstransistoren 3 gegenüberliegenden Oberseite des Substrats 2 angeordnet.

Die Leiterschleifen 8 weisen einen mäandernden Verlauf auf, wodurch sich die Leiterstrecke unter Einfluss der erhöhten Temperatur vergrößern und damit beispielsweise ein möglichst großer Absoluteffekt auf den Widerstand der Leiterschleifen 8 erzielen lässt.

Die Leiterschleifen 8 sind hier in Wesentlichen gegenüber der gesamten Fläche des jeweiligen Leistungstransistors 3 angeordnet.. Die Leiterschleifen 8 können aber auch eine größere Fläche als die Fläche des jeweiligen Leistungstranstors 3 abdecken (z. B. eine um 10-100% größere Fläche) um die gemessene absolute Widerstandsänderung zu vergrößern.

Die Leiterschleife 8 kann über mehrere Lagen mit Durchkontaktierungen (Vias) verbunden und geführt sein um die Länge im heißen Bereich über dem Leistungstransistor (z.B. MOSFET) zu maximieren. Hierdurch kann die Widerstandsänderung der Leiterschleife erhöht und damit die Sensitivität der Erfindung verbessert werden.

Das Leistungsmodul 1 umfasst eine anwendungsspezifische integrierte Schaltung 9 (ASIC), die mit beiden (allen) Leistungstransistoren 3 sowie mit den zwei (allen) entsprechenden Leiterschleifen 8 verbunden ist. Die ASIC 9 kann dann beispielsweise über eine Einzelgate-Steuerung die einzelnen Leistungstransistoren 3 regeln, um die Temperaturbelastung der Leistungstransistoren 3 (momentan oder über die Zeit) anzugleichen und damit die Gesamtlebensdauer des Leistungshalbleiters zu erhöhen. Die ASIC 9 kann auf der Unterseite oder der Oberseite des Substrats angeordnet sein (hier beispielsweise auf der Oberseite). Im letzteren Fall können die Leiterschleifen 8 beispielsweise über Durchkontaktierungen (Vias) mit der ASIC 9 verbunden sein. Die Leiterschleifen 8 sind mit der ASIC 9 hier nur beispielhaft an den beiden Enden der Leiterschleifen 8 verbunden, aber es sind auch andere Anschlussarten möglich (zum Beispiel für eine Vierpunktmessung), um eine höhere Genauigkeit der Widerstandsmessung zu ermöglichen.

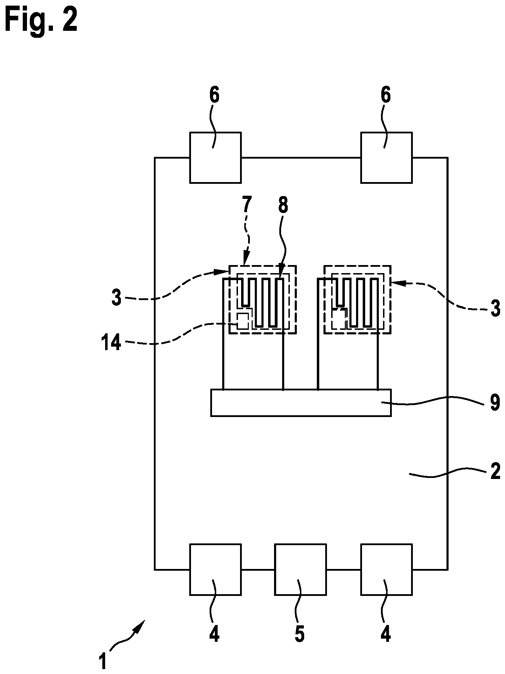

Fig. 2 zeigt eine zweite Ausführungsform eines Leistungsmoduls 1, die der beanspruchten Erfindung entspricht. Diese Ausführungsform entspricht im Wesentlichen der ersten Ausführungsform, wobei jedoch die Fläche, die von der Leiterschleife 8 abgedeckt wird, eine andere ist. Die Leiterschleife 8 bedeckt hier im Wesentlichen nur die Fläche des Source 7 des Leistungstransistors 3, bedeckt also nicht das Gate 14.

Bei einem Feldeffekttransistor ist der Source 7 üblicherweise die stärkste Wärmequelle und die Leiterschleife 8 kann für eine optimale Sensitivität daher nur gegenüber dem Source 7 angeordnet sein. Die Leiterschleifen können aber auch alternativ, gemäß nicht beanspruchten Alternativen, gegenüber einem anderen Teil des Leistungstransistors 3 oder im Wesentlichen gegenüber dem gesamten Leistungstransistor angeordnet sein (Fig.1). Es kann aber auch, gemäß einer nicht beanspruchten Alternative, eine Leiterschleife mehrere Leistungstransistoren 3 abdecken.

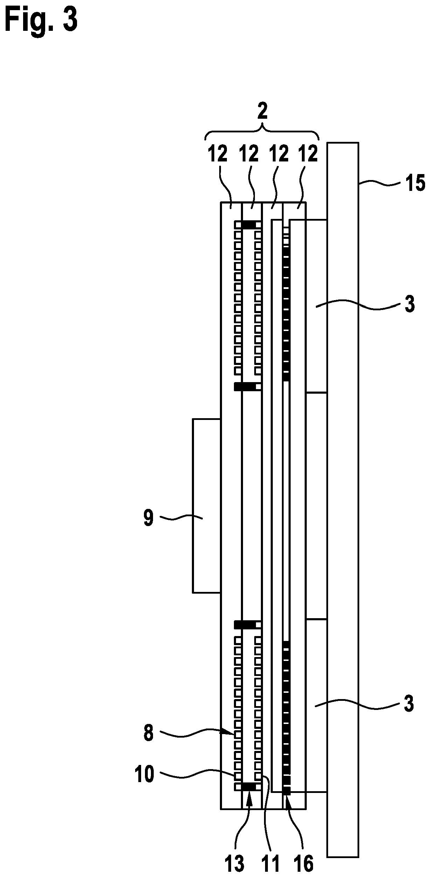

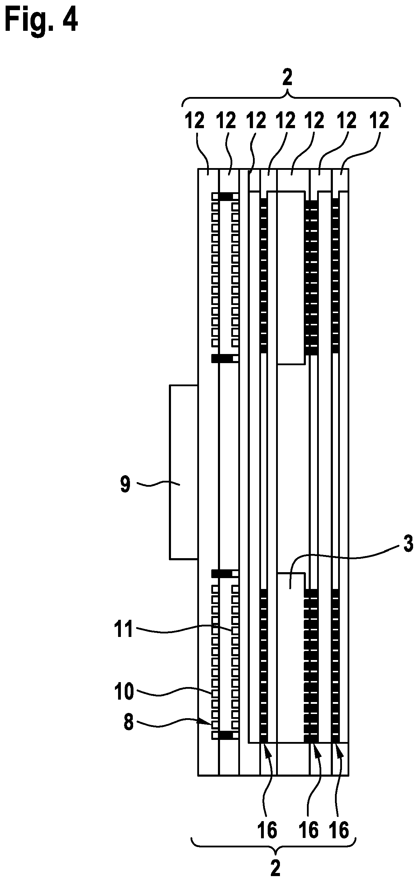

Fig. 3 zeigt eine dritte Ausführungsform eines Leistungsmoduls 1, beispielsweise der Fig.1 oder Fig. 2 im Querschnitt durch beide Leiterschleifen 8 und beide Leistungstransistoren 3. Die "Oberseite" des Substrats 2 entsprechend Anspruch 1 ist in Fig. 3 und 4 jeweils links angeordnet.

Die Leiterschleifen 8 umfassen hier je zwei Leiterschleifenabschnitte 10, 11 in zwei verschiedenen Substratschichten 12 für jeden Leistungstransistor 3. Ein mäandernder Verlauf der Leiterschleifenabschnitte 10, 11 ist in dieser Ansicht nur zu erahnen, da jede Leiterschleife (lediglich beispielhaft) dreizehnfach geschnitten wird. Das Leistungsmodul 1 umfasst hier ein erstes Substrat 2 und ein zweites Substrat 15. Das erste Substrat 2 umfasst hier vier Substratschichten 12, es sind aber auch zwei, drei, fünf oder mehr Substratschichten 12 möglich. Die Leistungstransistoren 3 sind zwischen den zwei Substraten 2, 15 eingebettet (gewissermaßen in Sandwichbauweise).

Die Leiterschleifenabschnitte 10, 11 sind über Durchkontaktierungen 13 (Vias) zwischen den Substratschichten 12 verbunden. Die Leistungstransistoren 3 sind weiterhin mit Leistungsverdrahtungen 16 verbunden, die insbesondere in der an die Leistungstransistoren angrenzenden 1-2 Substratschichten 12 angeordnet sind. Die Leistungsverdrahtungen 16 befinden sich dabei in unterschiedlichen Substratschichten 12 als die Leiterschleifen 8 zur Temperaturmessung.

Fig. 4 zeigt eine vierte Ausführungsform eines Leistungsmoduls 1 (bspw. auch eines der Fig. 1 oder 2). Die vierte Ausführungsform unterscheidet sich von der dritten dadurch, dass das Leistungsmodul 1 nur ein Substrat 2 mit (hier beispielhaft) sieben Substratschichten 12 aufweist. Die Leistungstransistoren 3 sind zwischen den Substratschichten 12 des Substrats 2 eingebettet. Hier sind auf beiden Seiten der Leistungstransistoren 3 in den je angrenzenden zwei Substratschichten Leistungsverdrahtungen 16 angeordnet.

Die Leiterschleifen 8 zur Temperaturmessung sind aber jeweils in den Fig. 3 und 4 in der obersten Substratschicht 12 (jeweils ganz links) sowie der darunterliegenden ersten inneren Substratschicht 12 (jeweils zweite von links) angeordnet.

## Patentansprüche

1. Leistungsmodul (1) umfassend ein vorzugsweise mehrschichtiges Substrat (2) sowie mindestens einen auf
einer Unterseite des Substrats (2) angeordneten Leistungstransistor (3), sowie mindestens einen mit dem Substrat (2) verbundenen Leistungsanschluss (4, 5, 6)
wobei eine Leiterschleife (8) zur Temperaturmessung auf einer dem Leistungstransistor (3) gegenüberliegenden Oberseite oder inneren oder äußeren Substratschicht (12) angeordnet ist,
**dadurch gekennzeichnet, dass** die Leiterschleife (8) oberhalb des Source (7) des Leistungstransistors (3) angeordnet ist und im Wesentlichen nur die Fläche des Source (7) des Leistungstransistors (3) und nicht das Gate (14) bedeckt.

2. Leistungsmodul (1) nach Anspruch 1, wobei die Leiterschleife (8) einen mäandernden Verlauf aufweist.

3. Leistungsmodul (1) nach einem der vorstehenden Ansprüche, wobei die Leiterschleife (8) über mehrere Substratschichten (12) verläuft.

4. Leistungsmodul (1) nach einem der vorstehenden Ansprüche, wobei auf dem Substrat (2) mindestens zwei Leistungstransistoren (3) angeordnet sind, wobei jeweils eine separate Leiterschleife (8) zur Temperaturmessung oberhalb des jeweiligen Leistungstransistors (3) in einer inneren Substratschicht (12) oder der Oberseite des Substrats (2) angeordnet ist.

5. Leistungsmodul (1) nach einem der vorstehenden Ansprüche, wobei mindestens eine Leiterschleife (8) einen temperaturabhängigen Widerstand aufweist.

6. Leistungsmodul (1) nach einem der Ansprüche 4 oder 5, umfassend mindestens eine anwendungsspezifische integrierte Schaltung (9), die mit mindestens zwei Leistungstransistoren (3) sowie mit den mindestens zwei entsprechenden Leiterschleifen (8) verbunden ist.

7. Leistungsmodul (1) nach Anspruch 6, wobei die anwendungsspezifische integrierte Schaltung (9) so eingerichtet ist, dass sie die Auslastung der mindestens zwei Leistungstransistoren (3) so steuert, dass die über die Leiterschleifen (8) gemessene Temperatur möglichst gleich ist.

8. Leistungsmodul (1) nach einem der vorstehenden Ansprüche, wobei das Substrat (2) eine mehrschichtige Niedertemperatur-Einbrand-Keramik umfasst.

9. Leistungsmodul (1) nach einem der vorstehenden Ansprüche, wobei die Temperaturmessung in mindestens einer Leiterschleife (8) über eine Vierpunktmessung oder einen Band-Ende-Abgleich erfolgt.

10. Leistungsmodul (1) nach einem der vorstehenden Ansprüche, wobei mehrere Leiterschleifen (8) in unterschiedlichen Substratschichten (12) angeordnet und in Reihe geschaltet sind.

11. Leistungsmodul (1) nach einem der vorstehenden Ansprüche welches mindestens zwei Substrate (2, 15) umfasst.

12. Leistungsmodul (1) nach einem der vorstehenden Ansprüche welches mehrere zwischen Substratschichten (12) eingebettete Leistungshalbleiter umfasst.

13. Leistungsmodul (1) nach Anspruch 11 oder 12 welches mehrere zwischen zwei Substraten (2, 15) eingebettete Leistungshalbleiter umfasst, wobei in mindestens einem der Substrate (2, 15) Leiterschleifen (8) zur Temperaturmessung angeordnet sind.

14. Leistungsmodul (1) nach einem der vorstehenden Ansprüche, umfassend mindestens einen Leistungshalbleiter, wobei eine weitere Leiterschleife (8) zur Temperaturmessung auf einer dem Leistungshalbleiter gegenüberliegenden Oberseite des Substrats (2) angeordnet ist.

## Claims

1. Power module (1) comprising a preferably multilayered substrate (2) and at least one power transistor (3) arranged on an underside of the substrate (2), and at least one power connection (4, 5, 6) connected to the substrate (2),
wherein a conductor loop (8) for temperature measurement is arranged on a top side or inner or outer substrate layer (12) opposite the power transistor (3),
**characterized in that** the conductor loop (8) is arranged above the source (7) of the power transistor (3) and covers substantially only the area of the source (7) of the power transistor (3) and not the gate (14).

2. Power module (1) according to Claim 1, wherein the conductor loop (8) has a meandering course.

3. Power module (1) according to either of the preceding claims, wherein the conductor loop (8) extends over a plurality of substrate layers (12).

4. Power module (1) according to any of the preceding claims, wherein at least two power transistors (3) are arranged on the substrate (2), wherein in each case a separate conductor loop (8) for temperature measurement is arranged above the respective power transistor (3) in an inner substrate layer (12) or the top side of the substrate (2).

5. Power module (1) according to any of the preceding claims, wherein at least one conductor loop (8) has a temperature-dependent resistance.

6. Power module (1) according to either of Claims 4 and 5, comprising at least one application-specific integrated circuit (9) which is connected to at least two power transistors (3) and to the at least two corresponding conductor loops (8).

7. Power module (1) according to Claim 6, wherein the application-specific integrated circuit (9) is configured such that it controls the capacity utilization of the at least two power transistors (3) such that the temperature measured by way of the conductor loops (8) is as far as possible identical.

8. Power module (1) according to any of the preceding claims, wherein the substrate (2) comprises a multilayered low-temperature cofired ceramic.

9. Power module (1) according to any of the preceding claims, wherein the temperature measurement in at least one conductor loop (8) takes place by way of a four-point measurement or an end-of-line calibration.

10. Power module (1) according to any of the preceding claims, wherein a plurality of conductor loops (8) are arranged in different substrate layers (12) and connected in series.

11. Power module (1) according to any of the preceding claims, which comprises at least two substrates (2, 15).

12. Power module (1) according to any of the preceding claims, which comprises a plurality of power semiconductors embedded between substrate layers (12).

13. Power module (1) according to Claim 11 or 12, which comprises a plurality of power semiconductors embedded between two substrates (2, 15), wherein conductor loops (8) for temperature measurement are arranged in at least one of the substrates (2, 15).

14. Power module (1) according to any of the preceding claims, comprising at least one power semiconductor, wherein a further conductor loop (8) for temperature measurement is arranged on a top side of the substrate (2) opposite the power semiconductor.

## Revendications

1. Module de puissance (1), comprenant un substrat (2) de préférence multicouche, ainsi qu'au moins un transistor de puissance (3) disposé sur une face inférieure du substrat (2), ainsi qu'au moins une connexion de puissance (4, 5, 6) reliée au substrat (2), dans lequel une boucle conductrice (8) de mesure de température est disposée sur une face supérieure opposée au transistor de puissance (3) ou sur la couche de substrat (12) intérieure ou extérieure,
**caractérisé en ce que** la boucle conductrice (8) est disposée au-dessus de la source (7) du transistor de puissance (3) et ne couvre substantiellement que la surface de la source (7) du transistor de puissance (3) et non pas la grille (14).

2. Module de puissance (1) selon la revendication 1, dans lequel la boucle conductrice (8) présente un tracé en méandre.

3. Module de puissance (1) selon l'une quelconque des revendications précédentes, dans lequel la boucle conductrice (8) s'étend sur plusieurs couches de substrat (12) .

4. Module de puissance (1) selon l'une quelconque des revendications précédentes, dans lequel au moins deux transistors de puissance (3) sont disposés sur le substrat (2), dans lequel respectivement une boucle conductrice (8) de mesure de température séparée est disposée au-dessus du transistor de puissance respectif (3) dans une couche de substrat intérieure (12) ou la face supérieure du substrat (2).

5. Module de puissance (1) selon l'une quelconque des revendications précédentes, dans lequel au moins une boucle conductrice (8) présente une résistance dépendant de la température.

6. Module de puissance (1) selon l'une quelconque des revendications 4 ou 5, comprenant au moins un circuit intégré spécifique à une application (9), qui est relié à au moins deux transistors de puissance (3) ainsi qu'auxdits au moins deux boucles conductrices (8) correspondantes.

7. Module de puissance (1) selon la revendication 6, dans lequel le circuit intégré spécifique à une application (9) est conçu de telle sorte qu'il commande le taux d'utilisation desdits au moins deux transistors de puissance (3) de telle sorte que la température mesurée au niveau des boucles conductrices (8) est la même dans la mesure du possible.

8. Module de puissance (1) selon l'une quelconque des revendications précédentes, dans lequel le substrat (2) comprend une céramique au four basse température multicouche.

9. Module de puissance (1) selon l'une quelconque des revendications précédentes, dans lequel la mesure de température dans au moins une boucle conductrice (8) est effectuée par une mesure en quatre points ou une comparaison bande/extrémité.

10. Module de puissance (1) selon l'une quelconque des revendications précédentes, dans lequel plusieurs boucles conductrices (8) sont disposées dans différentes couches de substrat (12) et sont connectées en série.

11. Module de puissance (1) selon l'une quelconque des revendications précédentes, comprenant au moins deux substrats (2, 15).

12. Module de puissance (1) selon l'une quelconque des revendications précédentes, comprenant plusieurs semi-conducteurs de puissance incorporés entre des couches de substrat (12).

13. Module de puissance (1) selon la revendication 11 ou 12, comprenant plusieurs semi-conducteurs de puissance incorporés entre deux substrats (2, 15), dans lequel des boucles conductrices (8) de mesure de température sont disposées dans au moins l'un des substrats (2, 15).

14. Module de puissance (1) selon l'une quelconque des revendications précédentes, comprenant au moins un semi-conducteur de puissance, dans lequel une boucle conductrice (8) de mesure de température supplémentaire est disposée sur une face supérieure du substrat (2), opposée au semi-conducteur de puissance.
